Europäisches Patentamt

European Patent Office

Office européen des brevets

(11) Veröffentlichungsnummer: **0 218 161 B1**

(12) **EUROPÄISCHE PATENTSCHRIFT**

(45) Veröffentlichungstag der Patentschrift: **22.07.92**

(51) Int. Cl.5: **H04L  12/26**, H04L 1/20

(21) Anmeldenummer: **86113309.8**

(22) Anmeldetag: **26.09.86**

(54) **Verfahren zur Analyse und Synthese von binären Zeichen.**

(30) Priorität: **09.10.85 DE 3536031**

(43) Veröffentlichungstag der Anmeldung:
**15.04.87 Patentblatt  87/16**

(45) Bekanntmachung des Hinweises auf die
Patenterteilung:
**22.07.92 Patentblatt  92/30**

(84) Benannte Vertragsstaaten:
**DE FR IT SE**

(56) Entgegenhaltungen:
**DE-A- 3 012 510
DE-A- 3 131 845
US-A- 3 985 955
US-A- 4 074 358**

(73) Patentinhaber: **BBC Brown Boveri AG
Haselstrasse
CH-5401 Baden(CH)**

(72) Erfinder: **Guszman-Edery, Jorge, Dipl.-Ing.
Bussardstrasse 22
W-8526 Bubenreuth(DE)**
Erfinder: **Steiger, Wolfgang, Dipl.-Ing.
Carl-Lepper-Strasse 10
W-6840 Lampertheim(DE)**
Erfinder: **Böer, Michael, Dipl.-Ing.
Gustav-Nachtigal-Strasse 34
W-6800 Mannhein 81(DE)**

(74) Vertreter: **Rupprecht, Klaus, Dipl.-Ing. et al
c/o ABB Patent GmbH, Patentabteilung,
Postfach 10 03 51
W-6800 Mannheim 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Analyse und Synthese von binären Zeichen. Bei den binären Zeichen kann es sich sowohl um einzelne Elemente (Impulse, Pausen) als auch um eine Folge von mehreren Elementen, also z.B. um Übertragungsblöcke oder Telegramme handeln.

Für Messungen an Datenleitungen sowie für die Prüfung von empfangenen Zeichen in einer Empfangseinrichtung werden Verfahren und Einrichtungen benutzt, die eine Feststellung von Zeichenverzerrungen ermöglichen. Handelsübliche PCM-Digitalsignalanalysatoren oder Telegrafie-Verzerrungsmesser, wie z.B. ausgeführt in "Einheiten, Grundbegriffe-Meßverfahren der Nachrichtenübertragungstechnik", 4. Auflage, Herausgeber und Verlag Siemens AG, insbesondere Seite 150 bis 157 sind aufwendig und sind nur für pulscodemodulierte Signale geeignet.

Aus der DE-OS 31 31 845 ist ein Verfahren zum Erzeugen und Erfassen binärer Zeichen beliebiger Zeichencodierung bekannt. Dabei wird zum Empfangen binärer Zeichen der Zustand (O- oder L-Signal) einer Empfangsleitung mit einer wählbaren Abtastrate abgetastet und mit Hilfe eines Prozessors eine Signalliste erstellt, die ein Abbild der Leitungszustände in ihrem zeitlichen Verlauf darstellt. Der Inhalt der Signalliste steht für eine Auswertung des Informationsinhaltes zur Verfügung. In der genannten Druckschrift wird auch bereits erwähnt, daß mit Hilfe dieser Signalliste eine unzulässige Zeichenverzerrung erkannt werden kann. Allerdings wird hierzu keine Lehre offenbart, insbesondere ist nicht ersichtlich, wie eine quantitative Messung der Zeichenverzerrung und eine Anzeige erfolgen könnte.

Ausgehend von dem aus der DE-OS 31 31 845 bekannten Verfahren liegt der vorliegenden Erfindung die Aufgabe zugrunde, ein Verfahren zur Analyse von binären Zeichen anzugeben, das insbesondere eine quantitative Messung der Zeichenverzerrung ermöglicht. Außerdem soll das Verfahren auch eine Synthese binärer Zeichen ermöglichen.

Diese Aufgabe wird bei einem Verfahren nach dem Oberbegriff des Anspruchs 1 durch dessen kennzeichnende Merkmale gelöst. Vorteilhafte Ausgestaltungen sind in den Unteransprüchen angegeben.

Vorteile des Verfahrens bestehen darin, daß ein beliebig wählbarer Abschnitt eines Datenstromes auf einer Empfangsleitung analysiert werden kann. Die Zeichenmodulation kann beliebig sein, ist also nicht auf PCM beschränkt. Auch Synchronisierzeichen, Telegrammformat, Codierung und Übertragungssicherung können beliebiger Art sein.

Die Analyse von Telegrammen bezieht sich insbesondere auf die quantitative Messung der Zeichenverzerrungen einzelner Telegrammschritte und ist möglich nach verschieden definierten Zeichenverzerrungen bzw. Meßverfahren wie z.B. Isochron-, Start/Stop-, Zeitraster- und Zeitmeß-Verfahren. Dabei ist eine zur Messung erforderliche Synchronisierung auf Startzeichen beliebiger Impulsfolge möglich und eine Verarbeitung von auf eine Normimpulsdauer oder Abtastperiode $T_0$ bezogene nichtganzzahlige Zeichenlänge, wie z.B. 1,5 $T_0$, 2,2 $T_0$, 3,7 $T_0$. Auch sehr kurze Impulse, sogenannte Spikes können erfaßt und verarbeitet oder mit Hilfe einer einstellbaren Störimpulsunterdrückung selektiert werden. Die Flankenlage der Impulse kann mit hoher Auflösung, z.B. 1% erfaßt werden.

Die Telegrammanalyse kann sich z.B. auch auf eine Decodierung des Informationsinhaltes (L, O, Fehler) von Zeichen beziehen, auf eine Formatprüfung oder Formatdecodierung oder eine Prüfzeichendecodierung.

Alle diese Analysen werden ermöglicht durch die Schaffung eines listenmäßigen Abbildes des Leitungszustandes durch Auflistung von Signalbytes in der erfindungsgemäßen Weise und die Nutzung der in dieser Liste enthaltenen Signalbytes zur Adressierung von Tabellen, die eine Interpretation des Informationsinhaltes enthalten bzw. eine Zuordnung zu einem Meßwert herstellen. Die Adressierung der Tabellen erfolgt nach Verarbeitung des Inhalts aufeinanderfolgender Signalbytes mit Hilfe eines Verarbeitungsalgorithmus.

Das erfindungsgemäße Verfahren läßt sich außerdem vorteilhaft nutzen zur Realisierung von Synthesizern, also zur Umsetzung von gespeicherten Zeichenmustern in Synthesignale.

Eine ausführliche Beschreibung erfolgt anhand der Zeichnungen.

Es zeigen:

Fig. 1　　　　eine aus DE-OS 31 31 845 bekannte Anordnung zur Schaffung eines Abbildes des Leitungszustandes (Signalliste),

Fig. 2a bis 2d　Beispiele für Zeichen und deren Auflösung in erfindungsgemäße Signalbytes zur Ablage in der Signalliste,

Fig. 3　　　　Darstellung des erfindungsgemäßen Verfahrens zur Analyse von Zeichen, insbesondere zur Messung und Anzeige von Zeichenverzerrungen,

Fig. 4　　　　Darstellung des erfindungsgemäßen Verfahrens zur Synthese von Zeichen.

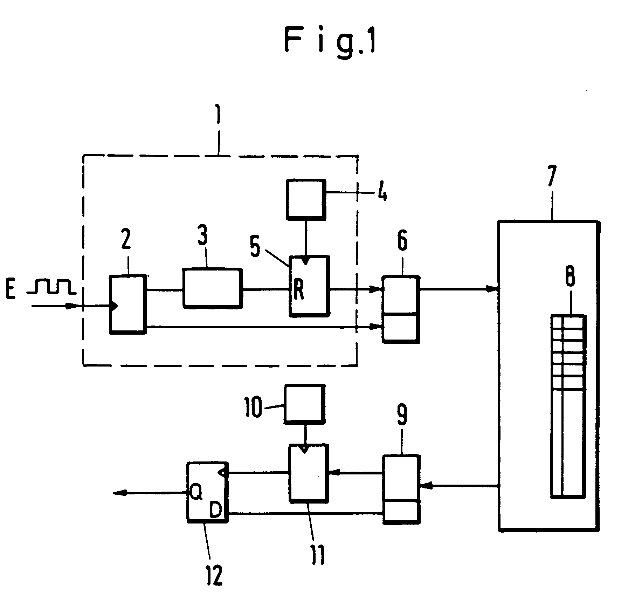

Fig. 1 zeigt eine prinzipiell bereits aus dem Stand der Technik bekannte Einrichtung zur Schaffung eines Abbildes des Leitungszustandes. Dabei wird ein Empfangssignal E einer Abtasteinrichtung 1 zugeführt. Mit der Abtasteinrichtung 1 wird die Polarität (O- oder L-Pegel) eines digitalen Signales und seine Dauer festgestellt. Die Abtastung des Signals erfolgt nicht nur einmal, z.B. in der Impulsmitte, sondern sehr häufig. Im Hinblick auf die erfindungsgemäß vorgesehene Nutzung der Signaldarstellung zur Ermittlung der Zeichenverzerrung ist eine etwa 100-malige Abtastung zweckmäßig, um eine 1%-ige Auflösung zu erreichen. Außerdem wird erfindungsgemäß eine Abtastperiode $T_0$ definiert, die die Dauer eines zur Übertragung benutzten Normzeichenelementes hat. Im vorliegenden Beispiel ist eine 96-malige Abtastung innerhalb der Abtastperiode $T_0$ gewählt, weil diese Abtastrate günstig ist im Hinblick auf vorgesehene Baudraten. Die Abtastung erfolgt mit Hilfe eines in der Abtasteinrichtung 1 enthaltenen, durch einen Taktgenerator 4 gesteuerten Zählers 5. Die Abtasteinrichtung 1 enthält außerdem eine Einrichtung 3 zur Flankenerkennung. Der Zähler 5 wird jeweils beim Auftreten einer Signalflanke, jedoch spätestens nach der Abtastperiode $T_0$ angehalten, sein Zählerstand in einen nachgeschalteten Fifo-Speicher 6 übernommen und der Zähler 5 auf Null gesetzt. Außerdem wird im Fifo-Speicher 6 die Polarität des Zeichens während des Abtastzeitraumes (Dauer zwischen zwei Flanken, maximal je Abtastperiode $T_0$) gespeichert. Die Polarität wird mit einem Polaritätsspeicher 2 ermittelt und festgehalten. Ein Mikroprozessor 7 übernimmt den Inhalt des Fifo-Speichers 6 und legt in einem RAM-Speicher eine Signalliste 8 an, die ein Abbild des Leitungszustandes darstellt.

Aus dem genannten Stand der Technik ist es weiterhin bekannt, den Inhalt der Signalliste 8 umzusetzen in zu sendende Leitungssignale. Der Inhalt der Signalliste 8 wird dabei als byteweise Darstellung der zu sendenden Signale aufgefaßt, wobei jeweils ein Bit die Polarität und die übrigen Bits die Länge des Signals angeben.

Der Inhalt der Signalliste 8 wird byteweise in ein Register 9 übernommen. Dem Register 9 ist ein von einem zweiten Taktgenerator 10 gesteuerter programmierbarer Zähler 11 nachgeschaltet. Die Längenangabe eines im Register 9 gespeicherten Bytes programmiert den Zähler 11. Gesteuert durch den Taktgenerator 10 zählt der Zähler 11 bis beim programmierten Zählerstand ein Überlaufsignal am Ausgang des Zählers 11 erscheint und einem zweiten Polaritätsspeicher 12 als Zeitbezug zugeführt wird. Die Polaritätsangabe wird dem zweiten Polaritätsspeicher 12 direkt aus dem Register 9 zugeführt. Jeweils beim Auftreten eines Zählerüberlaufsignals erfolgt im zweiten Polaritätsspeicher 12 die Auswertung einer neuen Polaritätsangabe. Wenn ein digitales Signal auf diese Weise erzeugt und am Ausgang des zweiten Polaritätsspeichers 12 abgegeben ist, erfolgt eine Rückmeldung an den Mikroprozessor 7, der das nächste Signalbyte aus der Signalliste 8 entnimmt und in das Register 9 lädt.

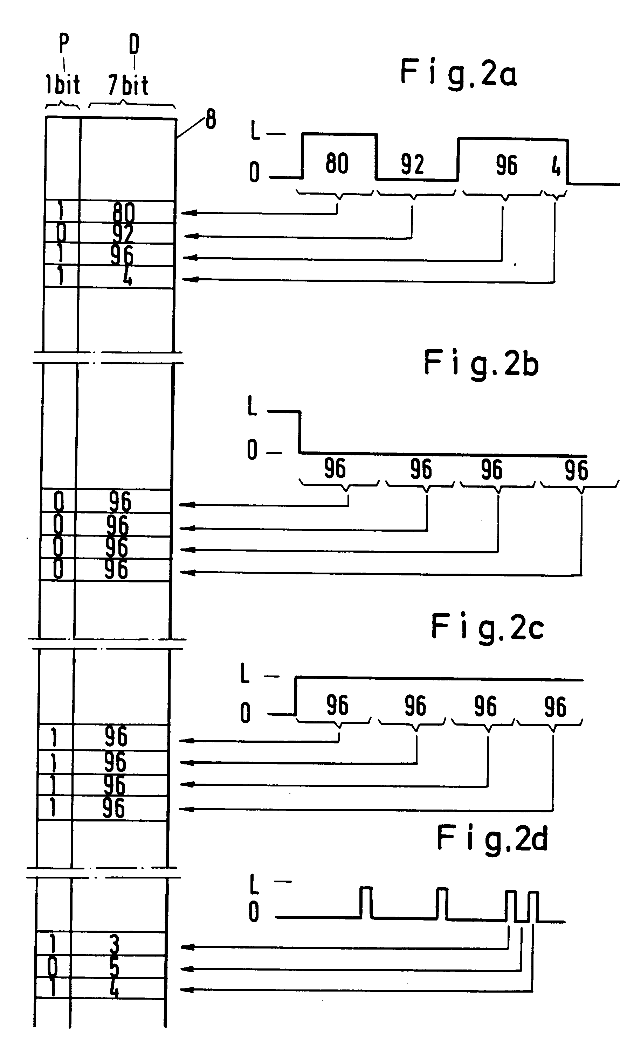

Die Fig. 2a bis 2d zeigen Beispiele für Signalmuster (Zeichen) auf einer Empfangs- oder Sendeleitung und deren byteweise Darstellung in der Signalliste 8. Dabei sind 96 Abtastungen je Abtastperiode $T_0$ vorgesehen.

Fig. 2a zeigt ein erstes Zeichen mit L-Pegel, das 80 Takte lang ist und in der Signalliste 8 dargestellt ist durch eine 1 für die Polarität P und eine mit 7 Bits verschlüsselt gespeicherte Zahl 80 für die Dauer D. Auf dieses erste Zeichen folgt ein Zeichen mit O-Pegel, das 92 Takte lang ist. Der als drittes Zeichen folgende Impuls (L-Pegel) ist 100 Takte lang. Er erfordert die Speicherung in zwei Signalbytes in der Signalliste 8, nämlich zuerst einem Signalbyte mit der Längenangabe 96 und einem weiteren Signalbyte mit der Längenangabe 4. Beide Signalbytes enthalten als Polaritätsangabe eine 1.

Fig. 2b zeigt wie eine Ruhelage, also andauerndes Nullsignal in der Signalliste 8 dargestellt wird, nämlich durch gleichartige Signalbytes mit der Längenangabe 96 und der Polaritätsangabe 0.

Fig. 2c zeigt eine Arbeitslage mit andauerndem L-Pegel. Dieser Leitungszustand wird durch eine Folge von Signalbytes mit der Längenangabe 96 und der Polaritätsangabe 1 in der Liste dargestellt.

Fig. 2d zeigt wie Spikes, also sehr kurze Impulse bzw. auch kurze Pausen in der Liste 8 dargestellt werden.

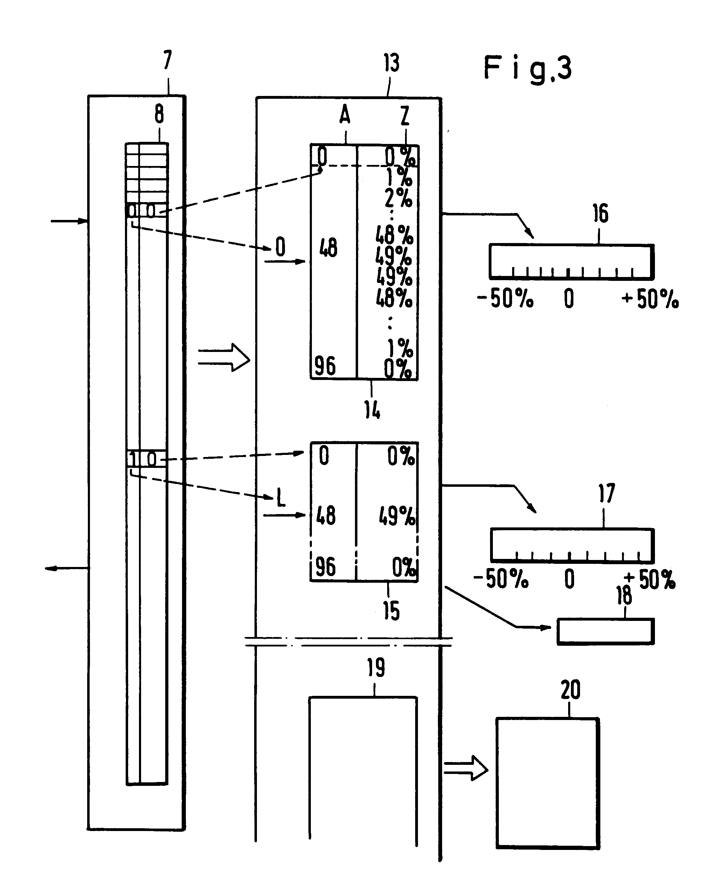

In Fig. 3 ist eine erfindungsgemäße Ergänzung der bekannten Einrichtung dargestellt. Dabei ist vorgesehen, daß in einem Assoziativspeicher 13 Tabellen 14, 15 abgelegt sind, die eine Umsetzung der in der Liste 8 gespeicherten Signalbytes in eine Aussage zur Zeichenverzerrungen ermöglichen, z.B. in eine Prozentangabe für die Zeichenverzerrung. Diese Zeichenverzerrung, die definitionsgemäß maximal ± 50% sein kann, kann z.B. in Balkenanzeigen 16, 17 zur Anzeige gebracht werden. Außerdem kann das Auftreten von Spikes mit einer Anzeigevorrichtung 18, z.B. einer Lampe, angezeigt werden. Dabei sind sowohl getrennte Tabellen 14, 15 als auch getrennte Balkenanzeigen 16, 17 für O-Signale und L-Signale vorgesehen.

Im dargestellten Beispiel sind für O- und L-Signale in den Tabellen 14 und 15 gleiche Prozentwerte eingetragen. Es ist jedoch möglich, den Abtastzahlen für O- und L-Signale unterschiedliche Prozentwerte zuzuordnen, wodurch z.B. auch Zeichenverzerrungen bei Signalen der digitalen Pulsdauermodulation DPDM gemessen werden können.

Der Fig. 3 ist zu entnehmen, daß das Polaritätsbit eines in der Signalliste 8 abgelegten Signalbytes dazu benutzt wird, die entsprechende Tabelle 14 (für O-Pegel) oder 15 (für L-Pegel) auszuwählen, also entsprechende Bereiche des Speichers 13 zu adressieren. Mit der Längeninformation wird ein innerhalb der Tabelle 14 oder 15 liegender Speicherplatz adressiert und damit ein zugehöriger aufgerundeter Prozentwert für die Zeichenverzerrung ermittelt. Sowohl die Längenangabe 0 als auch die Längenangabe 96 entsprechen einer Zeichenverzerrung von 0%. Die größte Zeichenverzerrung wird bei der Längenangabe 48 erreicht. Im Bereich einer Längenangabe von über 48 bis kleiner als 96 ist die Zeichenverzerrung negativ. Wenn die Längenangabe kleiner oder gleich 48 ist, hängt es von der Länge der vorherigen Signalbytes ab, ob es sich um eine positive Zeichenverzerrung oder um ein Spike handelt. Wenn das vorherige Signalbyte die Längeninformation 96 hatte, liegt bei einer Länge bis zu 48 eine positive Zeichenverzerrung vor, wenn die Länge des vorherigen Signals von 96 abweicht, liegt bei einer Länge bis 48 ein Spike vor. Entsprechend dieser Interpretation werden die Anzeigen 16, 17 und 18 angesteuert.

Die Anzeige der Zeichenverzerrung muß sich nicht auf einzelne Zeichenelemente oder die Abtastperiode $T_0$ beziehen, sondern kann sich auf beliebig wählbare Abschnitte eines Datenstromes, z.B. auf die zu einem Startzeichen gehörenden Zeichenelemente beziehen. Die Anzeige erfolgt in diesem Fall erst nach Verknüpfung einzelner Verzerrungswerte nach einem vorgegebenen Algorithmus, z.B. durch Mittelwertbildung.

Außer den Tabellen 14, 15 zur Ermittlung der Zeichenverzerrung können weitere Tabellen 19 vorgesehen sein, mit deren Hilfe in einer Verarbeitungseinheit 20 eine Analyse von Telegrammen möglich ist, z.B. eine Identifizierung von Zeichenelementen, einer Erkennung von Startzeichen oder Prüfzeichen oder eine Codeanalyse.

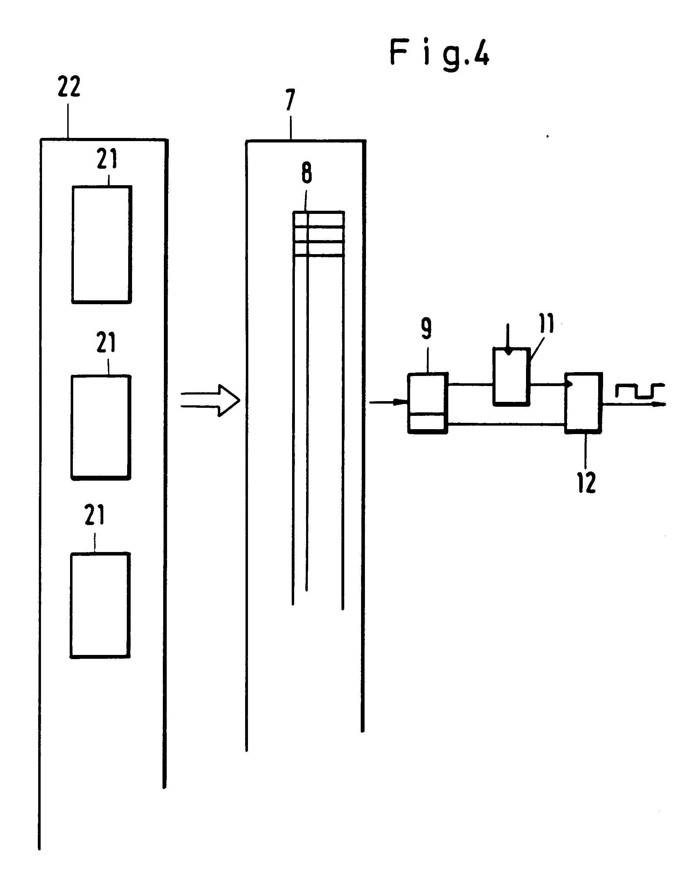

Fig. 4 stellt schematisch die Synthese von Zeichen dar. Dabei werden vom Mikroprozessor 7 aus einem Speicher 22 bzw. dort abgelegten Übertragungslisten 21 Daten für zu sendende Zeichen entnommen und in der Signalliste 8 aufbereitet als Signalbytes, in der in Fig. 2a bis 2d beispielhaft dargestellten Weise zwischengespeichert. Aus der Signalliste 8 wird jeweils ein Signalbyte in das Register 9 übernommen und in der bereits zu Fig. 1 beschriebenen Weise in ein Leitungssignal umgesetzt.

In einer der Übertragungslisten 21 können z.B. Daten für Normsignale oder Dauersignale gespeichert sein zur Realisierung einer Normsenderfunktion. Oder es können Norminformationen für verschiedene Übertragungssysteme gespeichert sein, wodurch die Funktion eines Prüfsenders ermöglicht wird.

Besonders geeignet ist das erfindungsgemäße Verfahren auch zur Realisierung eines Simulators, mit dem sich z.B. Fernwirksysteme testen lassen.

Dazu können z.B. Übertragungsstörungen simuliert werden mit Hilfe von Prüftelegrammen, die Spikes, Bündelstörungen, Bitfehler, Codefehler, Synchronisierungsfehler oder als Prozentwerte fesgelegte Zeichenverzerrungen simulieren.

Mit einer Einrichtung zur Durchführung des erfindungsgemäßen Verfahrens können auch tatsächlich auf einer Übertragungsstrecke auftretende Störungen erfaßt und durch Aufzeichnung der Datenströme in hochaufgelöster Darstellung in der Signalliste 8 gespeichert und von dort gegebenenfalls in einen anderen Speicher übernommen werden. Solche Aufzeichnunen können auch an einem anderen Ort, z.B. im Labor durch Zeichensynthese zu Testzwecken benutzt werden.

Eine weitere Anwendungsmöglichkeit des Verfahrens besteht darin, empfangene Zeichen zu korrigieren (Entzerren, Fehler beseitigen) und in bereinigter Form zurück oder weiterzusenden.

**Patentansprüche**

1. Verfahren zur Analyse und Synthese von binären Zeichen
   - unter Verwendung eines Zählers (5) zur Messung der Dauer eines Signalimpulses beim Empfangen beziehungsweise eines programmierbaren Zählers (11) zur Steuerung der Impulsdauer beim Senden sowie von Polaritätsspeichern (2,12) zur Feststellung bzw. Festlegung der Impulspolarität,
   - mit einer mehrfachen Abtastung eines empfangenen Zeichenelementes, wobei bei einem ersten Flankenwechsel der Zähler (5) gestartet wird, mit jedem Abtasttakt weiterzählt und bei einem weiteren Flankenwechsel der erreichte Zählerstand in einen Fifo-Speicher (6) übernommen, der Zähler (5) zurückgesetzt und neu gestartet wird, die während des Zählvorganges festgestellte Polarität ebenfalls in den Fifo-Speicher übernommen wird, so gebildete und im Fifo-Speicher (6) zwischengespeicherte Signalbytes von einem Mikroprozessor (7) übernommen und in einer Signalliste (8) abgelegt werden,
   - wobei zum Senden von Zeichen jeweils ein Signalbyte aus der Signalliste (8) entnommen und in ein Register (9) geladen wird, der programmierbare Zähler (11) aufgrund der Längeninformation im Signalbyte gesteuert wird und die Zähldauer die Dauer des zu generierenden Signalimpulses bestimmt und die Polarität des Impulses durch einen Polaritätsspeicher bestimmt wird, der direkt von dem Polaritätsbit des im Register (9) gespeicherten Signalbytes gesteuert wird, dadurch gekennzeichnet, daß

- ein durch eine bestimmte Anzahl von Abtasttakten definierte Abtastperiode ($T_0$) vorgesehen ist, und beim Empfangen von Zeichenelementen - außer nach einem weiteren Flankenwechsel - auch nach Ablauf der Abtastperiode ($T_0$) der erreichte Zählerstand in den Fifo-Speicher (6) übernommen, der Zähler (5) zurückgesetzt und neu gestartet wird sowie die Polarität des Zeichenelementes in den Fifo-Speicher (6) übernommen wird,

- die in der Signalliste (8) abgelegten Signalbytes benutzt werden zur Adressierung von in einem Speicher (13) abgelegten Tabellen (14,15), die Zeichenverzerrungswerte enthalten und

- die durch Adressierung ermittelten Zeichenverzerrungswerte direkt oder nach einer Verknüpfung ausgegeben werden.

2. Verfahren nach Anspruch 1, dadurch gekennzeichnet, daß die Zeichenverzerrungswerte als Prozentwerte in den Tabellen (14,15) abgelegt sind.

3. Verfahren nach Anspruch 1 oder 2, dadurch gekennzeichnet, daß die ausgegebenen Verzerrungswerte durch Balkenanzeigen (16,17) zur Anzeige gebracht werden.

4. Verfahren nach einem der Ansprüche 1 bis 3, dadurch gekennzeichnet, daß weitere Tabellen (19) vorgesehen sind, die ebenfalls durch Signalbytes aus der Liste (8) adressiert werden und die Hilfswerte ausgeben, mit deren Hilfe eine Feststellung von Startzeichen und sonstiger Zeichen oder eine Analyse des Informationsinhaltes durchgeführt wird.

5. Verfahren nach einem der vorstehenden Ansprüche, dadurch gekennzeichnet, daß durch Auswertung der ausgegebenen Zeichenverzerrungswerte Spikes erkannt und angezeigt werden.

6. Verfahren nach einem der vorstehenden Ansprüche, dadurch gekennzeichnet, daß zur Synthese von Zeichen Informationen aus Übertragungslisten (21) abgerufen und als Signalbytes in die Signalliste (8) übernommen werden.

**Claims**

1. Method for the analysis and synthesis of binary characters

- using a counter (5) for measuring the duration of a signal pulse during reception and, respectively, a programmable counter (11) for controlling the pulse duration during transmission, and polarity stores (2, 12) for establishing and, respectively, determining the pulse polarity,

- involving multiple sampling of a received character element, the counter (5) being started with a first change of edge, continuing to count with each sample clock pulse and, with a further change of edge, the count reached being transferred into a FIFO store (6), the counter (5) being reset and restarted, the polarity established during the counting process also being transferred into the FIFO store, signal bytes thus formed and buffer stored in the FIFO store (6) being transferred to a microprocessor (7) and being stored in a signal list (8),

- in which arrangement, for the transmitting of characters, one signal byte in each case being taken from the signal list (8) and loaded into a register (9), the programmable counter (11) being controlled on the basis of the length information in the signal byte and the counting duration determining the duration of the signal pulse to be generated and the polarity of the pulse being determined by a polarity store which is directly controlled by the polarity bit of the signal byte stored in the register (9), characterised in that

- a sampling period ($T_0$) defined by a certain number of sampling clock pulses is provided and on reception of character elements - except after a further change of edges - the count reached is transferred into the FIFO store (6) even after the sampling period ($T_0$) has elapsed, the counter (5) is reset and restarted and the polarity of the character element is transferred into the FIFO store (6),

- the signal bytes stored in the signal list (8) are used for addressing tables (14, 15) stored in a store (13), which tables contain character distortion values, and

- the character distortion values determined by the addressing are output directly or after a logic operation.

2. Method according to Claim 1, characterised in that the character distortion values are stored as percentage values in the tables (14, 15).

**3.** Method according to Claim 1 or 2, characterised in that the distortion values output are displayed by bar displays (16, 17).

**4.** Method according to one of Claims 1 to 3, characterised in that further tables (19) are provided which are also addressed by signal bytes from the list (8) and which output auxiliary values with the aid of which starting characters and other characters are established or the information content is analysed.

**5.** Method according to one of the preceding claims, characterised in that spikes are detected and indicated by evaluating the character distortion values which are output.

**6.** Method according to one of the preceding claims, characterised in that information items are called up from transfer lists (21) and are transferred as signal bytes into the signal list (8) for synthesis of characters.

**Revendications**

**1.** Procédé d'analyse et de synthèse de signes binaires
- dans lequel on utilise un compteur (5) pour mesurer la durée d'une impulsion de signal lors de la réception et/ou un compteur programmable (11) pour commander la durée d'impulsion lors de l'émission, ainsi que des mémoires de polarité (2, 12) pour déterminer/fixer la polarité des impulsions,
- qui comprend une exploration multiple d'un élément de signe reçu, au cours de laquelle, lors d'un premier changement de flanc, le compteur (5) est déclenché et compte à chaque cycle d'exploration, et, lors d'un nouveau changement de flanc, la position de compteur atteinte est envoyée dans une mémoire premier entré, premier sorti (fifo) (6), le compteur (5) est ramené à l'état initial et de nouveau déclenché, la polarité déterminée pendant l'opération de comptage est également envoyée dans la mémoire fifo (6), des octets de signaux ainsi formés et stockés temporairement dans la mémoire fifo (6) sont reçus par un microprocesseur (7) et stockés dans une liste de signaux (8),
- dans lequel, pour l'émission de signes, chaque fois un octet de signal est prélevé dans la liste des signaux (8) et chargé dans un registre (9), le compteur programmable (11) est commandé sur la base de l'information de longueur dans l'octet de signal, la durée de comptage détermine la durée de l'impulsion de signal à générer et la polarité de l'impulsion est déterminée par une mémoire de polarité qui est directement commandée par le bit de polarité de l'octet de signal stocké dans le registre (9),
caractérisé par le fait que
- il est prévu une période d'exploration ($T_0$) définie par un nombre déterminé de cycles d'exploration, et, lors de la réception d'éléments de signe - sauf après un nouveau changement de flanc - la position de compteur atteinte est envoyée dans la mémoire fifo (6), même après l'écoulement de la période d'exploration ($T_0$), le compteur (5) est ramené à l'état initial et de nouveau déclenché, et la polarité de l'élément de signe est envoyée dans la mémoire fifo (6),
- les octets de signaux déposés dans la liste de signaux (8) sont utilisés pour l'adressage de tables (14, 15) contenant des valeurs de distorsion de signaux et déposés dans une mémoire (13), et
- les valeurs de distorsion de signaux déterminées par adressage sont délivrées directement ou après une combinaison.

**2.** Procédé selon la revendication 1, caractérisé par le fait que les valeurs de distorsion de signaux sont déposées en tant que pourcentages dans les tables (14, 15).

**3.** Procédé selon la revendication 1 ou 2, caractérisé par le fait que les valeurs de distorsion délivrées sont indiquées par affichage en barres (16, 17).

**4.** Procédé selon l'une des revendications 1 à 3, caractérisé par le fait que d'autres tables (19) sont prévues qui sont également adressées par des octets de signaux provenant de la liste (8) et délivrent les valeurs auxiliaires permettant de déterminer des signes de démarrage et d'autres signes ou d'effectuer une analyse du contenu informationnel.

**5.** Procédé selon l'une des revendications précédentes, caractérisé par le fait que l'exploitation des valeurs de distorsion de signaux délivrées permet de détecter et d'afficher des pointes.

**6.** Procédé selon l'une des revendications précédentes, caractérisé par le fait que, pour la synthèse de signaux, des informations sont prélevées dans des listes de transmission (21) et transférées en tant qu'octets de signaux dans la liste de signaux (8).

# Fig.1

P D
1bit 7bit

8

Fig.2a

L
0
80 92 96 4

| 1 | 80 |
| 0 | 92 |
| 1 | 96 |
| 1 | 4 |

Fig.2b

L
0
96 96 96 96

| 0 | 96 |
| 0 | 96 |
| 0 | 96 |
| 0 | 96 |

Fig.2c

L
0
96 96 96 96

| 1 | 96 |
| 1 | 96 |
| 1 | 96 |
| 1 | 96 |

Fig.2d

L
0

| 1 | 3 |
| 0 | 5 |
| 1 | 4 |

Fig.3

# Fig.4